# EUROPEAN PATENT SPECIFICATION

(11) **EP 1 628 216 B1**
(45) Date of publication and mention of the grant of the patent: **05.09.2007**
(21) Application number: 05025037.2
(22) Date of filing: 04.04.2003
(51) Int. Cl.: G06F 9/46, G06F 12/06

(54) **Method and system for sharing a memory module**
Verfahren und System zum Teilen eines Speichermoduls
Méthode et système pour partager un module de mémoire

(30) Priority: 04.04.2002 US 117668; 26.04.2002 US 133941
(43) Date of publication of application: 22.02.2006
(62) Divisional of application: 03745789.2
(73) Proprietor: Infineon Technologies AG, 81669 München (DE)
(72) Inventor: Frenzel, Rudi, 81737 München (DE); Jain, Raj Kumar, 448908 Singapore (SG); Terschluse, Markus, 85579 Neubiberg (DE); Horak, Christian, 85591 Vaterstetten (DE); Uhlemann, Stefan, 81477 München (DE)
(74) Representative: Reinhard - Skuhra - Weise & Partner

(56) References cited:
- US-A- 3 931 613
- US-A- 4 918 587
- US-A- 5 857 110

## Description

### Field of the Invention

The present invention relates generally to integrated circuits (ICs). More, particularly, the invention relates to an improved architecture with shared memory.

### Background of the Invention

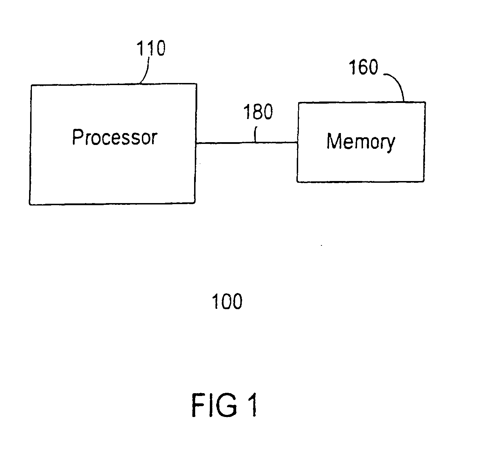

Fig. 1 shows a block diagram of a portion of a conventional System-on-Chip (SOC) 100, such as a digital signal processor (DSP). As shown, the SOC includes a processor 110 coupled to a memory module 160 via a bus 180.

The memory module stores a computer program comprising a sequence of instructions. During operation of the SOC, the processor retrieves and executes the computer instructions from memory to perform the desired function.

An SOC may be provided with multiple processors that execute, for example, the same program. Depending on the application, the processors can execute different programs or share the same program. Generally, each processor is associated with its own memory module to improve performance because a memory module can only be accessed by one processor during each clock cycle. Thus, with its own memory, a processor need not wait for memory to be free since it is the only processor that will be accessing its associated memory module. However, the improved performance is achieved at the sacrifice of chip size since duplicate memory modules are required for each processor.

US 3,931,613 discloses a data processing system in which the operating logic thereof is arranged to provide for an overlapping of the access, or fetch operations such that access to a second memory module can be obtained by a processor unit before a data transfer has been completed with respect to a first memory module and read-out of the second memory module can process during the rewrite cycle of the first module to reduce the overall processing time.

As evidenced from the above discussion, it is desirable to provide systems in which the processors can share a memory module to reduce chip size without incurring the performance penalty of conventional designs.

### Summary of the Invention

The invention relates to a method of sharing a memory module between a plurality of processors comprising: dividing the memory module into n banks, where n = at least 2, enabling the memory module to be accessed by one or more processors simultaneously; mapping the memory module to allocate sequential addresses to alternate banks of the memory; storing data words in memory, wherein data words in sequential addresses are stored in alternate banks due to the mapping of the memory; providing a first signal path, the first signal path coupling a cache to a processor and the memory module when selected, the cache enabling the processor to fetch a plurality of data words from different banks simultaneously providing a second signal path, the second signal path coupling the processor to the memory module when selected; and selecting the first signal path when contention has occurred and selecting the second signal path when contention has not occurred.

### Brief Description of the Drawings

Fig. 1 shows a block diagram of conventional SOC ;
Fig. 2 shows a system;
Figs. 3-5 show a flow of FCU;
Fig. 6 shows a system in accordance with one embodiment of the invention ;
Figs. 7-8 show flow diagrams of an arbitration unit in accordance with various embodiments of the invention ; and
Figs. 9-10 show memory modules in accordance with various embodiments of the invention.

### Preferred Embodiments of the Invention

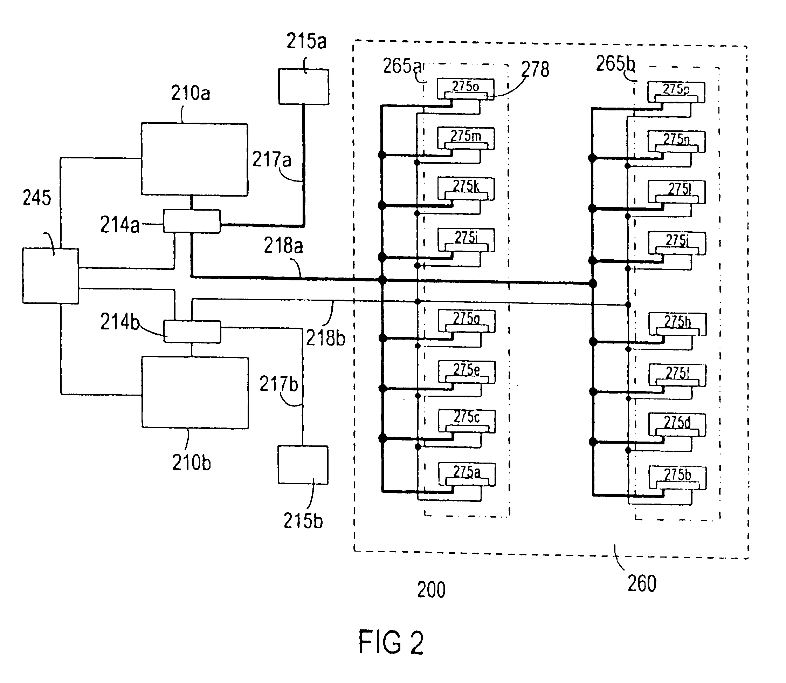

Fig. 2 shows a block diagram of a portion of a system 200.

The system comprises, for example, multiple digital signal processors(DSPs) for multi-port digital subscriber line (DSL) applications on a single chip. The system comprises m processors 210, where m is a whole number equal to or greater than 2. Illustratively, the system comprises first and second processors 210a-b (m = 2). Providing more than two processors in the system is also useful.

The processors are coupled to a memory module 260 via respective memory buses 218a and 218b. The memory bus, for example, is 16 bits wide. Other size buses can also be used, depending on the width of each data byte. Data bytes accessed by the processors are stored in the memory module.

Optionally, the data bytes comprise program instructions, whereby the processors fetch instructions from the memory module for execution.

Optionally the memory module is shared between the processors without noticeable performance degradation, eliminating the need to provide duplicate memory modules for each processor.

Noticeable performance degradation is avoided by separating the memory module into n number of independently operable banks 265, where n is an integer greater than or equal to 2. Preferably, n = the number of processors in the system (i. e. n = m). Since the memory banks operate independently, processors can simultaneously access different banks of the memory module during the same clock cycle.

A memory bank may be subdivided into x number of independently accessible blocks 275a-p, where x is an integer greater than or equal to 1. Optionally, each bank is subdivided into 8 independently accessible blocks. Generally, the greater the number of blocks, the lower the probability of contention. The number of blocks, in one embodiment, is selected to optimize performance and reduce contention.

Optionally, each processor (210a or 210b) has a bus (218a or 218b) coupled to each bank. The blocks of the memory array, each have, for example control circuitry 278 to appropriately place data on the bus to the processors.

The control circuitry comprises, for example, multiplexing circuitry or tri-state buffers to direct the data to the right processor. Each bank, for example, is subdivided into 8 blocks. By providing independent blocks within a bank, processors can advantageously access different blocks, irrespective of whether they are from the same bank or not. This further increases system performance by reducing potential conflicts between processors.

Furthermore, the memory is mapped so that contiguous memory addresses are rotated between the different memory banks. For example, in a two-bank memory module (e. g., bank 0 and bank 1), one bank (bank 0) would be assigned the even addresses while odd addresses are assigned to the other bank (bank 1). This would result in data bytes in sequential addresses being stored in alternate memory banks, such as data byte 1 in bank 0, data byte 2 in bank, data byte 3 in bank 0 and so forth. The data bytes may comprise instructions in a program. Since program instructions are executed in sequence with the exception of jumps (e. g. , branch and loop instructions), a processor would generally access different banks of the memory module after each cycle during program execution.

By synchronizing or staggering the processors to execute the program so that the processors access different memory banks in the same cycle, multiple processors can execute the same program stored in memory module 260 simultaneously.

A flow control unit (FCU) 245 synchronizes the processors to access different memory blocks to prevent memory conflicts or contentions. In the event of a memory conflict (e. g. two processors accessing the same block simultaneously), the FCU locks one of the processors (e. g. inserts a wait state or cycle) while allowing the other processor to access the memory. This should synchronize the processors to access different memory banks in the next clock cycle. Once synchronized, both processors can access the memory module during the same clock cycle until a memory conflict caused by, for example, a jump instruction, occurs. If both processors (210a and 210b) try to access block 275a in the same cycle, a wait state is inserted in, for example, processor 210b for one cycle, such that processor 210a first accesses block 275a. In the next clock cycle, processor 210a accesses block 275b and processor 210b accesses block 275a. The processors 210a and 210b are hence synchronized to access different memory banks in the subsequent clock cycles.

Optionally, the processors can be provided with respective critical memory modules 215. The critical memory module, for example, is smaller than the main memory module 260 and is used for storing programs or subroutines which are accessed frequently by the processors (e. g. , MIPS critical). The use of critical memory modules enhances system performance by reducing memory conflicts without going to the extent of significantly increasing chip size.

A control circuit 214 is provided. The control circuit is coupled to bus 217 and 218 to appropriately multiplex data from memory module 260 or critical memory module 215.

Optionally, the control circuit comprises tri-state buffers to decouple and couple the appropriate bus to the processor.

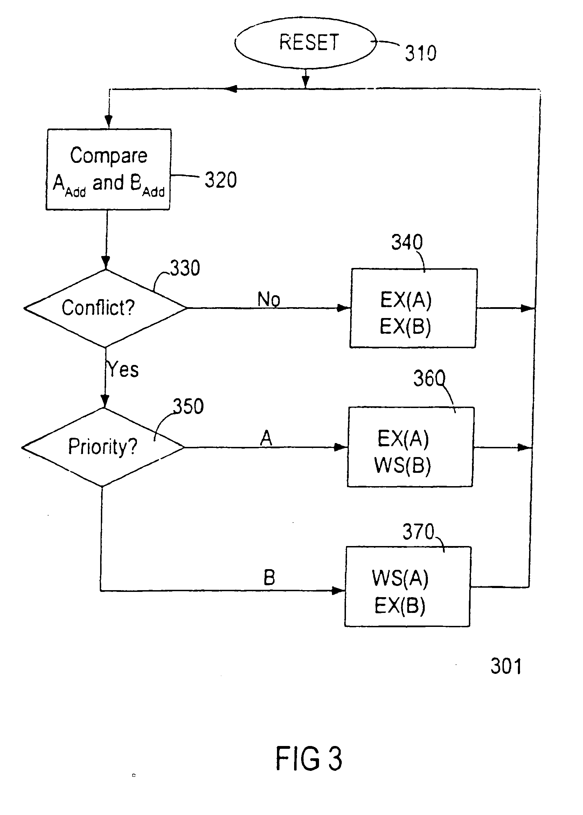

Optionally, the FCU is implemented as a state machine. Fig. 3 shows a general process flow of a FCU state machine. As shown, the FCU controls accesses by the processors (e. g. , A or B). At step 310, the FCU is initialized. During operation, the processors issue respective memory addresses(AAdd or BAdd) corresponding to the memory access in the next clock cycle. The FCU compares AAdd and BAdd at step 320 to determine whether thereis a memory conflict or not (e. g. , whether the processors are accessing the same or different memory blocks). Optionally, the FCU checks the addresses to determine if any critical memory modules are accessed (not shown). If either processor A or processor B is accessing its respective local critical memory, no conflict occurs.

If no conflict exists, the processors access the memory module at step 340 in the same cycle. If a conflict exists, the FCU determines the priority of access by the processors at step 350. If processor A has a higher priority, the FCU allows processor A to access the memory while processor B executes a wait state at step 360. If processor B has a higher priority, processor B accesses the memory while processor A executes a wait state at step 370.

After step 340,360, or 370, the FCU returns to step 320 to compare the addresses for the next memory access by the processors. For example, if a conflict exists, such as at step 360, a wait state is inserted for processor B while processor A accesses the memory at address AAdd. Hence, both processors are synchronized to access different memory blocks in subsequent cycles.

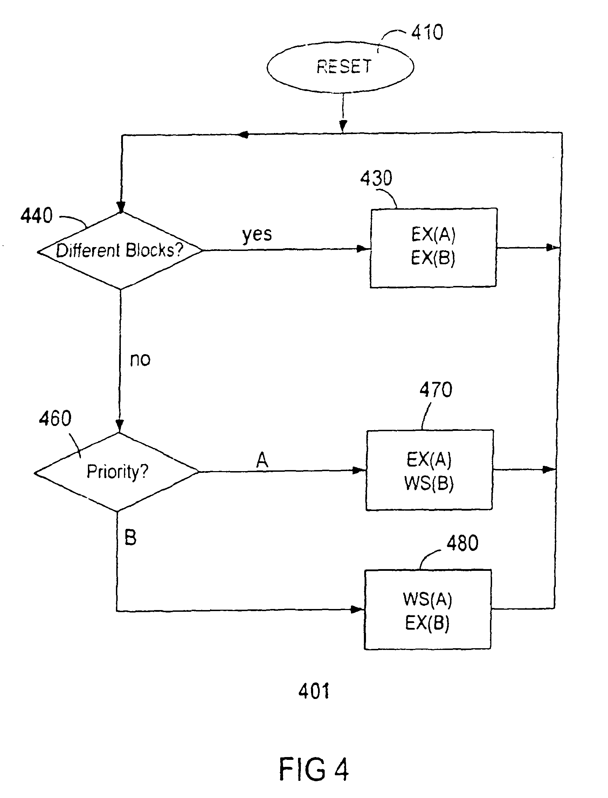

Fig. 4 shows a process flow 401 of an FCU. In the case of a conflict, the FCU assigns access priority at step 460 by examining processor A to determine whether it has executed a jump or not. Optionally , if processor B has executed a jump, then processor B is locked (e. g. a wait state is executed) while processor A is granted access priority. Otherwise, processor A is locked and processor B is granted access priority.

Optionally, the FCU compares the addresses of processor A and processor B in step 440 to determine if the processors are accessing the same memory block. In the event that the processors are accessing different memory blocks (i. e. , no conflict), the FCU allows both processors to access the memory simultaneously at step 430. If a conflict exists, the FCU compares, for example, the least significant bits of the current and previous addresses of processor A to determine access priority in step 460. If the least significant bits are not equal (i. e. the current and previous addresses are consecutive), processor B may have caused the conflict by executing a jump. As such, the FCU proceeds to step 470, locking processor B while allowing processor A to access the memory. If the least significant bits are equal, processor A is locked and processor B accesses the memory at step 480.

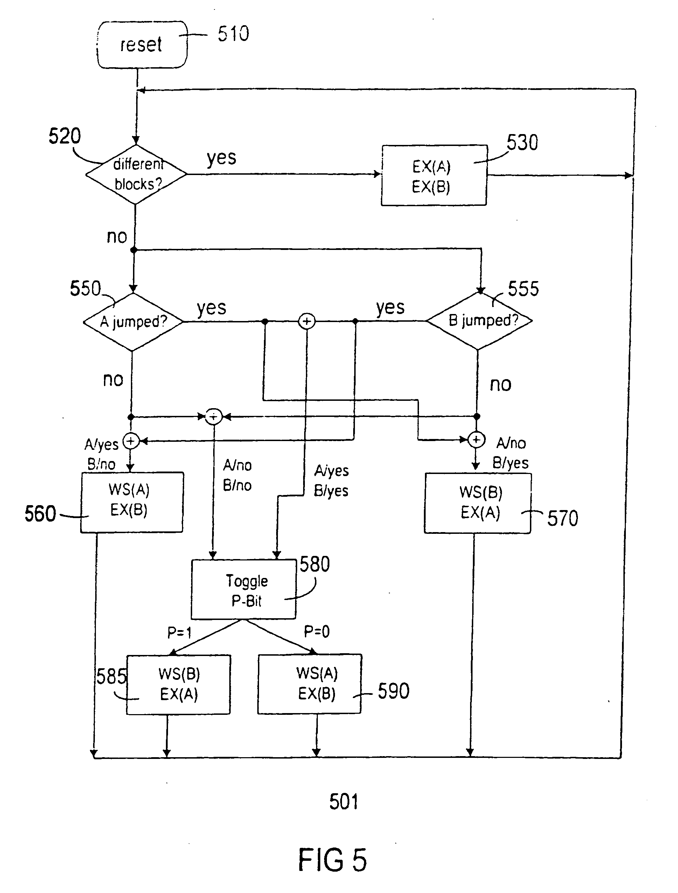

Fig. 5 shows an FCU 501. Prior to operation, the FCU is initialized at step 510. At step 520, the FCU compares the addresses of processors to determine it they access different memory blocks. If the processors are accessing different memory blocks, both processors are allowed access at step 530. However, if the processors are accessing the same memory block, a conflict exists. During a conflict, the FCU determines which of the processors caused the conflict, e. g. , performed a jump. Optionally, at steps 550 and 555, the least significant bits of the current and previous addresses of the processors are compared. If processor A caused the jump(e. g. , least significant bits of previous and current address of processor A are equal while least significant bits of previous and current address of processor B are not), the FCU proceeds to step 570. At step 570, the FCU locks processor A and allows processor B to access the memory at step 570. If processor B caused the jump, the FCU locks processor B while allowing processor A to access the memory at step 560.

A situation may occur where both processors performed a jump. In such a case, the FCU proceeds to step 580 and examines a priority register which contains the information indicating which processor has priority. Optionally, the priority register is toggled to alternate the priority between the processors. As shown in Fig. 5, the FCU toggles the priority register at step 580 prior to determining which processor has priority. Alternatively, the priority register can be toggled after priority has been determined. Optionally , a 1 in the priority register indicates that processor A has priority (step 585) while a 0 indicates that processor B has priority (step 590). Using a 1 to indicate that B has priority and a 0 to indicate that A has priority is also useful. The same process can also be performed in the event a conflict occurred in which neither processor performed a jump (e. g., least significant bits of the current and previous addresses of processor A or of processor B are not the same).

Other types of arbitration schemes may also be employed by the FCU to synchronize the processors. The processors may be assigned a specific priority level vis-a-vis the other processor or processors.

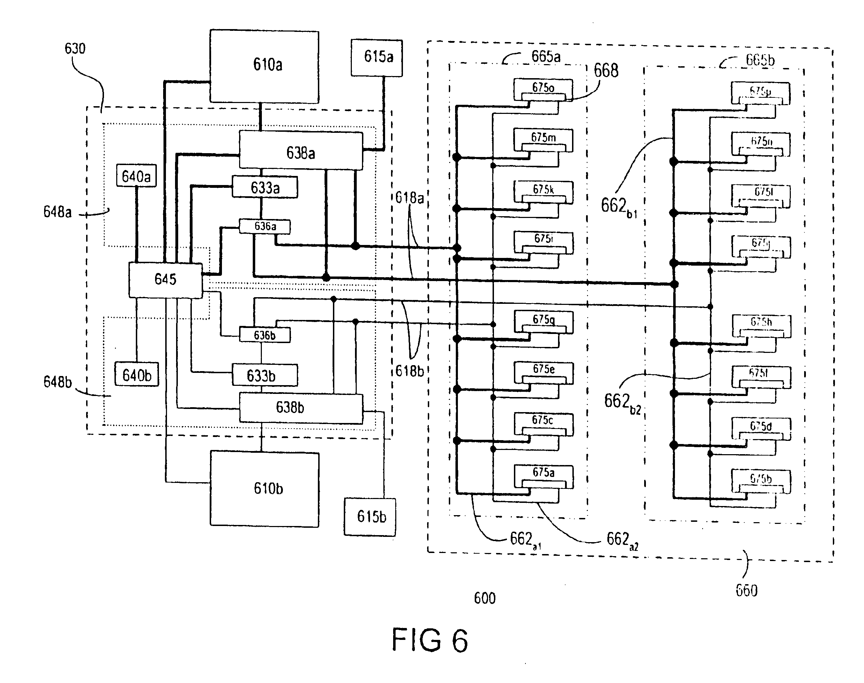

Fig. 6 shows a block diagram of a portion of a system 600 in accordance with one embodiment of the invention.

The system comprises, for example, multiple digital signal processors(DSPs) for multi-port digital subscriber line (DSL) applications on a single chip. The system comprises m processors 610, where m is a whole number equal to or greater than 2. Illustratively, the system comprises first and second processors 610a-b (m = 2). Providing more than two processors is also useful.

A memory module 660 is provided for sharing among the processors. Data words accessed by the processors are stored in the memory module. A data word comprises a group of bits (e. g. 32 bits). In one embodiment, the data words comprise program instructions, which are accessed by the processors from the memory module via memory buses (e. g. 618a and 618b) for execution. The data words can also comprise application data.

In accordance with one embodiment of the invention, the memory module is shared between the processors without noticeable performance degradation, eliminating the need to provide duplicate memory modules for each processor.

Noticeable performance degradation is avoided by separating the memory module into n number of independently operable banks (e. g. 665a and 665b), where n is a number greater than or equal to 2. Preferably, n = the number of processors in the system (i. e. n = m). Since the memory banks operate independently, the different banks can be simultaneously accessed during the same clock cycle.

In another embodiment, the banks can be further subdivided into x number of independently accessible blocks 675a-p, where x is an integer greater than or equal to 1.

A bank, for example, is subdivided into 8 independently accessible blocks. Generally, the greater the number of blocks, the lower the probability of contention. The number of blocks, in one embodiment, is selected to optimize performance and reduce contention.

The blocks of the memory array have, for example, control circuitry 668 to appropriately place data on the memory buses (e. g. 618a or 618b) to the processors (610a or 610b). The control circuitry comprises, for example, multiplexing circuitry or tri-state buffers to direct the data to the respective processors. By providing independent blocks within a bank, the processors can advantageously access different blocks simultaneously, irrespective of whether they are from the same bank or not.

This further increases system performance by reducing potential conflicts between processors.

Furthermore, the memory is mapped so that contiguous memory addresses are rotated between the different memory banks. For example, in a two-bank memory module (e. g., bank 0 and bank 1), one bank (bank 0) would be assigned the even addresses while odd addresses are assigned to the other bank (bank 1). This would result in data words in sequential addresses being located in alternate memory banks, such as data word 1 in bank 0, data word 2 in bank 1, data word 3 in bank 0 and so forth. In one embodiment, the data words comprise program instructions. Since program instructions are executed in sequence with the exception of jumps (e. g. , branch and loop instructions), a processor would generally access different banks of the memory module during program execution. By synchronizing or staggering the processors to execute the program so that the processors access different memory banks in the same cycle, multiple processors can execute the same program stored in memory module 660 simultaneously.

An arbitration control unit (ACU) 645 being coupled to the processor via the data bus and to the memory module via the memory bus is provided. The ACU controls access to the memory by the processors. In the event of a memory contention (e. g., two processors accessing the same bank simultaneously), the ACU determines which processor has priority to access the memory module while the other processors are locked (e. g. by executing a wait state or cycle). This generally synchronizes the processors to access different banks in the subsequent clock cycles.

In one embodiment, a priority register is provided to indicate which processor has priority. In the case of a system with two processors, the priority register may comprise one bit(P bit). Additional bits may be included to accommodate additional number of processors. The priority register is updated after the occurrence of contention to rotate the priority between the processors.

For example, a value of 1' in the P bit indicates that the first processor has priority and a 0' indicates that the second processor has priority. During each cycle where a contention occurs, the P bit is toggled, switching the priority of the processors. Other types of arbitration schemes are also useful.

Optionally, the processors can be provided with respective critical memory modules 615. The critical memory module, for example, is smaller than the main memory module 660 and is used for storing programs or subroutines which are accessed frequently by the processors (e. g. , MIPS critical). The use of critical memory modules enhances system performance by reducing memory conflicts without going to the extent of significantly increasing chip size.

The ACU 645 is coupled to n control logic units (CLUs), one for each of the n processors. Illustratively, the ACU comprises first CLU 648a and second CLU 648b for first processor 610a and second processor 610b respectively. When a CLU is activated, its respective processor is allowed access to the memory module. In one embodiment, the CLU is coupled to a processor and to the n banks of memory module, enabling the processor to access the n memory banks simultaneously. Since the bandwidth of a processor is equal to the bandwidth of a memory bank, the CLU allows the processor to fetch from memory more words than needed. In one embodiment, the processor can potentially fetch twice the data words needed.

The CLU comprises first (cache) and second (normal) signal paths. The cache signal path comprises, for example, a cache register (633a or 633b) and a multiplexer (636a or 636b). When the cache path is selected, the processor coupled to the CLU accesses the first and second memory banks (665a-b). In one embodiment, the current address location (Addr), as specified by the processor, and the next address (Addr + 1) are accessed.

The multiplexer selects the word at (Addr + 1) and stores it in the cache while the word at the current address (Addr) is passed to the processor. The address of the word stored in the cache is stored in, for example, a cache address register (640a or 640b). If the second path (normal) is selected, the processor accesses the current memory location. The CLU passes the data word at the current memory location to the processor via the second path. By providing a cache to store data in subsequent addresses, the probability of data access from memory is lowered, hence reducing memory latency caused by memory contention.

The processors can be provided with respective critical memory modules 615a and 615b. The critical memory module, for example, is smaller than the main memory module 660 and is used for storing data (e. g. programs or subroutines) which are accessed frequently by the processors (e. g. , MIPS critical). The use of critical memory modules enhances system performance by reducing memory conflicts without going to the extent of significantly increasing chip size.

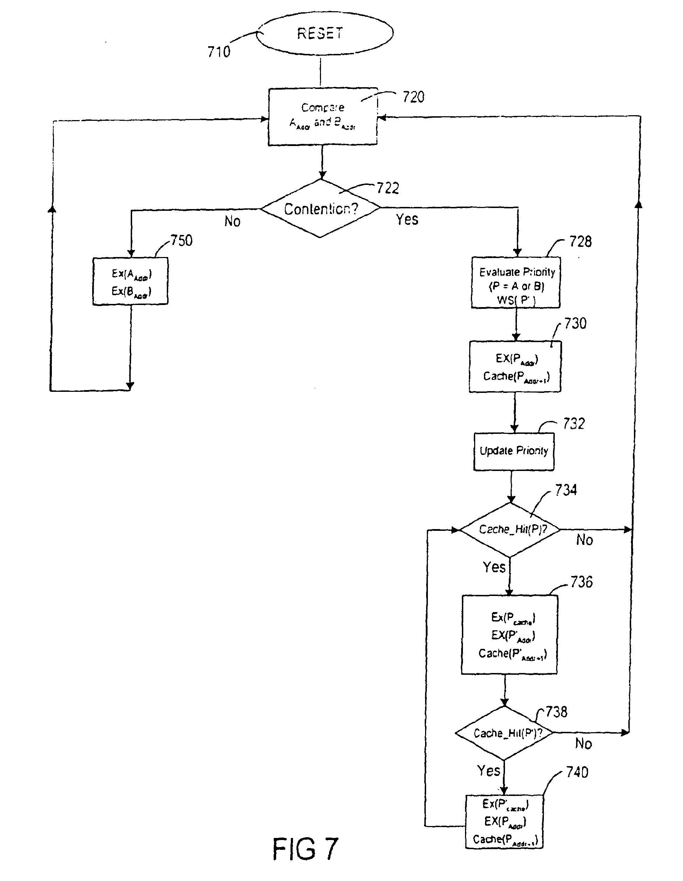

Fig. 7 shows a process flow of an ACU state machine in accordance with one embodiment of the invention. As shown, the ACU controls accesses by first and second processors (A or B). The ACU system is initialized (710), for example,before system operation (e. g. , system power up).

Initialization includes, for example, setting the priority bit to indicate which processor has priority in the event of a memory contention. The priority register, for example, is set to give processor A priority.

During operation of the system, the processors issue respective memory addresses corresponding to the memory access in the next clock cycle (AAddr and BAddr representing the memory addresses currently issued by processor A and processor B). The ACU determines whether there is a memory contention or not at steps 720 and 722, e. g. , whether the processors are accessing the same memory range or not. The memory range coincides, in one embodiment, with a memory block. In another embodiment, the memory range coincides with memory blocks in different banks, the memory blocks comprising consecutive addresses. If no contention exists, processors A and B access respective banks of the memory module at step 750. The CLUs of processors A and B are activated with the normal signal paths selected. Thus, each processor retrieves data words from respective memory banks at addresses AAddr and BAddr.

If a contention occurs, the ACU evaluates the priority register to determine which processor has access priority at step 726. The processor P with access priority (e. g., processor A) is allowed access to the memory while the other processorP' with lower priority executes a waitstate (e. g. , processor B) at step 728. Hence, if the processors subsequently access data words in sequential locations in the next cycles, different banks will be accessed without executing wait-states. By synchronizing or staggering the processors to execute the program so that the processors access different memory banks in the same cycle, multiple processors can execute the same program stored in memory module 660 simultaneously without contention.

The CLU of processor P is activated with the cache signal path selected, at step 730. The data from the current address PAddr and the next consecutive address PAddr+1 are fetched from the memory banks. The data in the current address PAddr is passed to the processor P for access and data in the next address PAddr+1 is stored in the cache register. The ACU updates the priority at step 332 for the next contention evaluation at step 722.

The ACU determines at step 734 if a new address PAddr specified by the processor P in the next cycle matches the address of the cache data (i. e. cache hit). If a cache miss occurs, the process is repeated by evaluating the addresses specified by processors A and B for contention at step 720. In one embodiment, the data in the cache register associated with processor P is discarded.

A cache hit would allow processor P to continue execution by retrieving the data from the cache instead of memory, thus avoiding the insertion of a wait-state at step 736. In one embodiment, the CLU of processor P' is activated with the cache signal path selected at step 734.

The data from the current address P'Addr and the next address P' Addr+1 are fetched from the memory banks. The data in the current address P'Addr is passed to the processor P' for access and the data in the next address P'Addr+1 is stored in the cache register associated with P'. If there is a cache hit for processor P' in the next cycle, the cache data is accessed by the processor P' at step 740.

The data in the current address PAddr of processor P accessed by the processor and the data in the next address PAddr+1 is stored in the cache register associated with P.

There is no need to check for contention as only one processor is accessing the memory. The determination of a cache hit for processor P is repeated at step 734. If a cache miss for P' occurs at step 738, the ACU repeats the whole process at step.

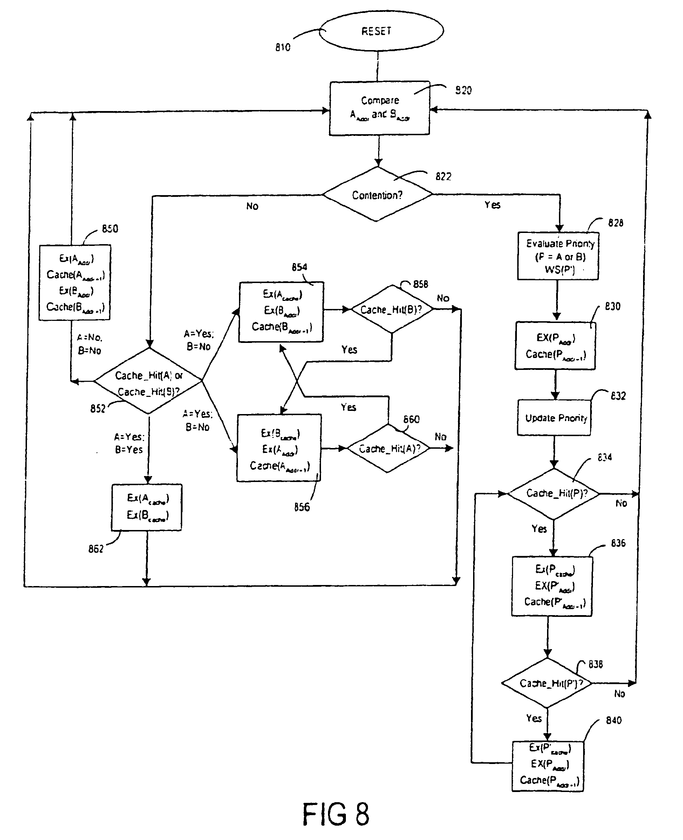

In another embodiment shown in Fig. 8, the ACU comprises the cache signal path for each processor, the cache signal path allowing more data words to be fetched from memory than requested by the processor. The cache signal path comprises, for example, a cache register and a multiplexer. During the operation of the system, the addresses issued by processors A and B are evaluated for contention at steps 820 and 822. If contention exists, the priority is evaluated and wait states are inserted for the processor with lower priority as previously described in Fig. 7.

If no contention exists, the caches associated with both processors are evaluated for cache hit at step 852.

If no cache hits are found, processors A and B access respective banks of the memory module at step 850 via the respective cache signal paths. In one embodiment, the CLUs of processors A and B are activated with the cache paths selected. The data in the current memory addresses(AAddr and BAddr) is passed to the respective processors for access and data in the next consecutive addresses(AAddr+1 and BAddr+1) is stored in the respective cache registers. If cache hits are detected for both processors, the respective cache contents are accessed by the processors at step 862 and the process repeats at step 820.

If a cache hit is found for only one of the processors, memory access may continue for the other processor without the need to test for contention since only one processor is accessing the memory. For example, if a cache hit is detected for processor A and a cache miss is detected for processor B, the contents of the cache associated with processor A is accessed while the data from the current memory address BAddr is accessed by processor B at step 854. Data from the memory at the next location BAddr+1 is stored in the cache associated with processor B.

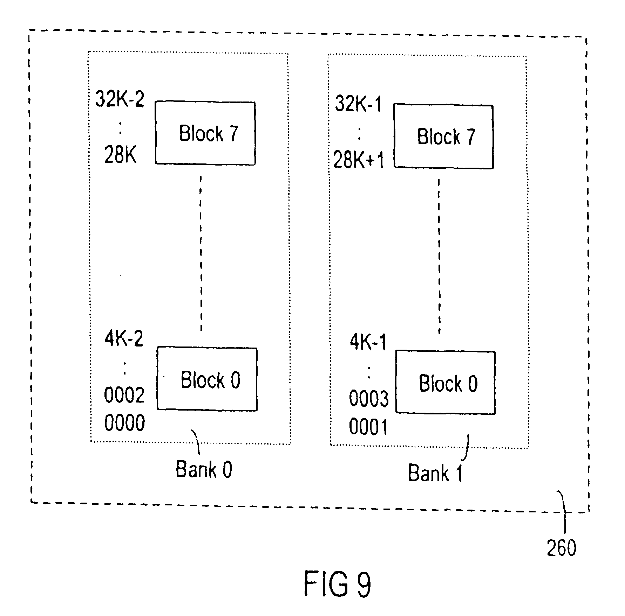

In the next cycle, the cache for processor B is monitored again for a cache hit. If a cache hit occurs, the cache contents for processor B is retrieved at step 856. The data from memory at address AAddr will be fetched for processor A. A cache miss at step 858 will cause the process to be repeated from step 820. Figs. 9-10 illustrate the mapping of memory in accordance with different embodiments of the invention.

Referring to Fig. 9, a memory module 260 with 2 banks (Bank 0 and Bank 1) each subdivided into 8 blocks (Blocks 0-7) is shown. Illustratively, assuming that the memory module comprises 512Kb of memory with a width of 16 bits, each block being allocated 2K addressable locations (2K x 16 bits x 16 blocks). In one embodiment, even addresses are allocated to bank 0 (i. e. , 0,2, 4... 32K-2) and odd addresses to bank 1 (i. e.,1, 3,5... 32K-1). Block 0 of bank 0 would have addresses 0,2, 4... 4K-2; block 1 of bank 1 would have addresses1, 3,5... 4K-1.

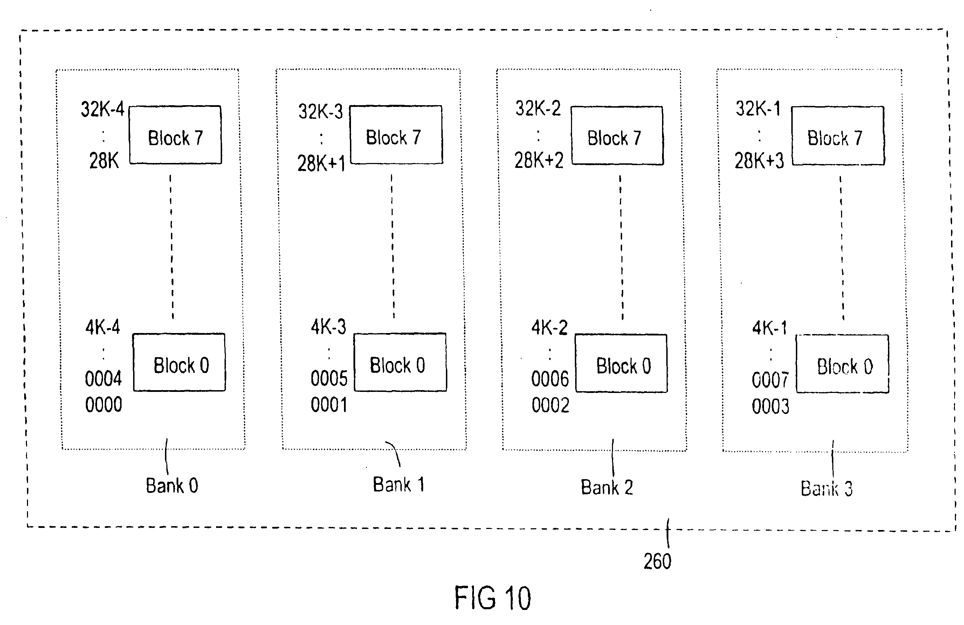

Referring to Fig. 10, a memory module with 4 banks (Banks 0-3) each subdivided into 8 blocks (Blocks 0-7) is shown. Assuming that the memory module 512Kb of memory with a width of 16 bits, than each block is allocated 1K addressable locations (1K x 16bits x 32 blocks). In the case where the memory module comprises 4 banks, as shown in Fig. 10, the addresses would be allocated as follows: Bank 0: every fourth address from 0 (i. e. , 0,4, 8, etc.) Bank 1 : every fourth address from 1 (i. e. , 1,5, 9, etc.) Bank 2: every fourth address from 2 (i. e. , 2,6, 10, etc.) Bank 3: every fourth address from 3 (i. e. , 3,7, 11, etc.) The memory mapping can be generalized for n banks as follows:Bank 0: every nth address beginning with 0 (i. e. , 0, n, 2n, 3n, etc.) Bank 1 : every nth address beginning with 1 (i. e. , 1, 1+n, 1+2n, 1+3n, etc.) Bank n-1: every nth address beginning with n-1 (i. e.,n-1, n-1+n, n-1+2n, etc.) While the invention has been particularly shown and described with reference to various embodiments, it will be recognized by those skilled in the art that modifications and changes may be made to the present invention without departing from the scope thereof. The scope of the invention should therefore be determined not with reference to the above description but with reference to the appended claims.

## Claims

1. A method of sharing a memory module (660) between a plurality of processors (610) comprising:
dividing the memory module (660) into n banks (665), where n is at least 2, enabling the memory module (660) to be accessed by one or more processors (660) simultaneously;
mapping the memory module (660) to allocate sequential addresses to alternate banks (675) of the memory (660) ;
storing data words in memory (660), wherein data words in sequential addresses are stored in alternate banks due to the mapping of the memory; **characterised by**
providing a first signal path, the first signal path coupling a cache to a processor (610) and the memory module (660) when selected, the cache enabling the processor (660) to fetch a plurality of data words from different banks (665) simultaneously;
providing a second signal path, the second signal path coupling the processor (610) to the memory module (660) when selected; and
selecting the first signal path when contention has occurred and selecting the second signal path when contention has not occurred.

2. The method of claim 1 further including a step of dividing the bank (665) into x blocks (675), where x is at least 1, wherein a block (675) can be accessed by one of the plurality of processors (610) at any one time.

3. The method of claims 1 or 2, wherein contention occurs, when two or more processors (610) are accessing the same address range at any one time.

4. The method of claim 2 and 3, wherein the address range coincides with at least one block (675).

5. The method of any of the claims 1-4 further including a step of synchronizing the processors (610) to access different banks (665) when contention has occurred.

6. The method of any of the claims 1-5, further including a step of determining access priorities of the processors (610) when contention has occurred.

7. The method of claim 6, wherein the step of determining access priorities comprises assigning lower access priorities to processors (610) that have caused the contention.

8. The method of claim 5, wherein the step of synchronizing the processors (610) comprises inserting wait states for processors with lower priorities when contention occurs.

9. A system comprising:
a plurality of processors (610);
a memory module (660) comprising n banks (665), where n is at least 2, wherein a bank (665) can be accessed by one or more processors (610) at any one time;
a memory map for allocating sequential addresses to alternate banks (665) of the memory module (660);
data words stored in memory (660), wherein data words in sequential addresses are stored in alternate banks (665) according to the memory map; and
a plurality of control logic unit (648) for enabling a processor (660) to access a plurality of data words from different banks (665), **characterised in that** a control logic unit (648) comprises first and second signal paths, the first signal path coupling a cache to a processor (660) and the memory module (660) when contention occurs and the second signal path coupling the processor (660) to the memory module (660) when contention has not occurred.

10. The system of claim 9, wherein the first signal path comprises a cache register (633) and a multiplexer(636).

11. The system of claim 9 or 10, wherein the bank (665) comprises x blocks (675), where x is at least 1, wherein a block (675) can be accessed by one of the plurality of processors (610) at any one time.

12. The system of any of the claims 9-11, further comprising a flow control unit (645) for synchronizing the processors (610) to access different blocks (675) at any one time.

13. The system of any of the claims 9-12, further comprising a priority register for storing the access priority of a processor (610).

14. The system of any of the claims 9-13, further comprising a plurality of critical memory modules (615) for storing a plurality of data words for the processors (610) to reduce the possibility of contention.

## Patentansprüche

1. Verfahren zur gemeinsamen Nutzung eines Speichermoduls (660) durch mehrere Prozessoren (610), aufweisend:
Unterteilen des Speichermoduls (660) in n Bereiche (665), wobei n wenigstens 2 ist, und **dadurch** ermöglichen, dass auf das Speichermodul (660) von einem oder mehreren Prozessoren (660) gleichzeitig zugegriffen werden kann;
Kartieren des Speichermoduls (660) zum Zuordnen aufeinanderfolgender Adressen zu wechselnden Bereichen (675) des Speichers (660);
Speichern von Datenwörtern im Speicher (660), wobei Datenwörter in aufeinanderfolgenden Adressen in abwechselnden Bereichen aufgrund der Kartierung des Speichers gespeichert werden;
**gekennzeichnet durch**
Bereitstellen eines ersten Signalpfades, der, wenn ausgewählt, einen Cache mit einem Prozessor (610) und dem Speichermodul (660) koppelt, wobei der Cache erlaubt, dass der Prozessor (660) eine Mehrzahl von Datenwörtern von verschiedenen Bereichen (665) gleichzeitig abrufen kann;
Bereitstellen eines zweiten Signalpfades, der den Prozessor (610) mit dem Speichermodul (660) koppelt wenn ausgewählt; und
Auswählen des ersten Signalpfades im Falle einer Kollision und Auswählen des zweiten Signalpfades, wenn keine Kollision aufgetreten ist.

2. Verfahren nach Anspruch 1, ferner aufweisend eines Verfahrensschrittes des Unterteilens des Bereiches (665) in x Blöcke, wobei x wenigstens gleich 1 ist, wobei auf einen Block (675) durch einen oder mehrere Prozessoren (610) zu einem gegebenen Zeitpunkt zugegriffen werden kann.

3. Verfahren nach Anspruch 1 oder 2, wobei eine Kollision auftritt, wenn zwei oder mehrere Prozessoren (610) auf denselben Adressbereich zu einem gegebenen Zeitpunkt zugreifen.

4. Verfahren nach Anspruch 2 und 3, wobei der Adressbereich mit wenigstens einem Block (675) übereinstimmt.

5. Verfahren nach einem der Ansprüche 1-4, ferner aufweisend eines Verfahrensschrittes des Synchronisierens der Prozessoren (610), um auf verschiedene Bereiche (665) zuzugreifen, wenn eine Kollision aufgetreten ist.

6. Verfahren nach einem der Ansprüche 1-5, ferner aufweisend eines Verfahrensschrittes des Ermittelns von Zugriffsprioritäten der Prozessoren (610) wenn eine Kollision aufgetreten ist.

7. Verfahren nach Anspruch 6, bei dem der Schritt des Ermittelns der Zugriffsprioritäten ein Zuweisen von geringeren Zugriffsprioritäten an Prozessoren aufweist, welche die Kollision verursacht haben.

8. Verfahren nach Anspruch 5, bei dem der Schritt des Synchronisierens der Prozessoren ein Einfügen von Waitestates für die Prozessoren mit geringeren Prioritäten aufweist, wenn eine Kollision aufgetreten ist.

9. Ein System, aufweisend:
eine Mehrzahl von Prozessoren (610);
ein Speichermodul (660) mit n Bereichen, wobei n wenigstens gleich 2 ist, wobei auf einen Bereich (665) von einem oder mehreren Prozessoren zu einem gegebenen Zeitpunkt zugegriffen werden kann;
eine Speicherkarte zum Zuordnen aufeinanderfolgender Adressen zu wechselnden Bereichen (665) des Speichermoduls (660);
im Speicher (660) gespeicherte Datenwörter, wobei die Datenwörter in aufeinanderfolgenden Adressen in wechselnden Bereichen (665) gemäß der Speicherkarte gespeichert sind; und
eine Mehrzahl von Steuerlogikeinheiten, die einem Prozessor (660) es ermöglichen, auf eine Mehrzahl von Datenwörtern von verschiedenen Bereichen (665) zuzugreifen,
**dadurch gekennzeichnet,**
**dass** eine Steuerlogikeinheit erste und zweite Signalpfade aufweist, wobei im Falle einer Kollision der erste Signalpfad einen Cache mit einem Prozessor (660) und dem Speichermodul (660) koppelt und im Falle keiner Kollision der zweite Signalpfad den Prozessor (660) mit dem Speichermodul (660) koppelt.

10. System nach Anspruch 9, wobei der erste Signalpfad ein Cache Register (633) und einen Multiplexer (636) aufweist.

11. System nach Anspruch 9 oder 10, wobei der Bereich (665) x Blöcke (675) aufweist, wobei x wenigstens gleich 1 ist, wobei auf einen Block (675) von einem oder mehreren der Mehrzahl von Prozessoren (610) zu einem gegebenen Zeitpunkt zugegriffen werden kann.

12. System nach einem der Ansprüche 9-11, ferner aufweisend eine Flusssteuereinheit (645) zum Synchronisieren der Prozessoren (610), damit diese auf verschiedene Blöcke (675) zu einem gegebenen Zeitpunkt zugreifen.

13. System nach einem der Ansprüche 9-13, ferner aufweisend ein Prioritätsregister zum Speichern der Zugriffspriorität eines Prozessors (610).

14. System nach einem der Ansprüche 9-13, ferner aufweisend eine Mehrzahl kritischer Speichermodule (615) zum Speichern einer Mehrzahl von Datenwörtern für die Prozessoren (610), um die Möglichkeit einer Kollision zu verringern.

## Revendications

1. Procédé de partage d'un module de mémoire (660) entre une pluralité de processeurs (610) comprenant :
la division du module de mémoire (660) en n banques (665), où n est au moins 2, permettant au module de mémoire (660) d'être accédé par un ou plusieurs processeurs (660) simultanément ;
la configuration du module de mémoire (660) pour attribuer des adresses séquentielles à des banques alternatives (675) de la mémoire (660) ;
le stockage en mémoire de mots de données (660), dans lequel des mots de données en adresses séquentielles sont stockés dans des banques alternatives à cause de la configuration de la mémoire ; **caractérisé par**
la mise à disposition d'un premier trajet de signal, le premier trajet de signal associant un cache à un processeur (610) et au module de mémoire (660) lorsqu'il est sélectionné, le cache permettant au processeur (660) d'extraire une pluralité de mots de données depuis différentes banques (665) simultanément ;
la mise à disposition d'un second trajet de signal, le second trajet de signal associant le processeur (610) au module de mémoire (660) lorsqu'il est sélectionné ; et
la sélection du premier trajet de signal lorsqu'un conflit a eu lieu et la sélection du second trajet de signal lorsqu'un conflit n'a pas eu lieu.

2. Procédé selon la revendication 1, incluant en outre une étape de division de la banque (665) en x blocs (675), où x est au moins 1, dans lequel un bloc (675) peut être accédé par l'un de la pluralité de processeurs (610) à tout moment.

3. Procédé selon la revendication 1 ou 2, dans lequel un conflit a lieu, quand deux processeurs (610) ou plus accèdent à la même plage d'adresses à tout moment.

4. Procédé selon la revendication 2 et 3, dans lequel la plage d'adresses coïncide avec au moins un bloc (675).

5. Procédé selon l'une quelconque des revendications 1 - 4, incluant en outre une étape de synchronisation des processeurs (610) pour accéder aux différentes banques (665) quand un conflit a eu lieu.

6. Procédé selon l'une quelconque des revendications 1 - 5, incluant en outre une étape de détermination de priorités d'accès des processeurs (610) quand un conflit a eu lieu.

7. Procédé selon la revendication 6, dans lequel l'étape de détermination de priorités d'accès comprend l'attribution de priorités d'accès inférieures aux processeurs (610) qui ont provoqué le conflit.

8. Procédé selon la revendication 5, dans lequel l'étape de synchronisation des processeurs (610) comprend l'insertion d'états d'attente pour des processeurs à priorités inférieures lorsqu'un conflit a lieu.

9. Système comprenant :
une pluralité de processeurs (610) ;
un module de mémoire (660) comprenant n banques (665), où n est au moins 2, dans lequel un ou plusieurs processeurs (610) peuvent accéder à une banque (665) à tout moment ;
une configuration de mémoire pour attribuer des adresses séquentielles à des banques alternatives (665) du module de mémoire (660) ;
des mots de données stockés en mémoire (660), dans lesquels des mots de données en adresses séquentielles sont stockés dans les banques alternatives (665) selon la configuration de la mémoire ; et
une pluralité d'unités logiques de commande (648) pour permettre à un processeur (660) d'accéder à une pluralité de mots de données depuis différentes banques (665), **caractérisé en ce qu'**une unité logique de commande (648) comprend des premier et second trajets de signal, le premier trajet de signal associant un cache à un processeur (660) et au module de mémoire (660) lorsqu'un conflit a lieu et le second trajet de signal associant le processeur (660) au module de mémoire (660) quand un conflit n'a pas eu lieu.

10. Système selon la revendication 9, dans lequel le premier trajet de signal comprend un registre de cache (633) et un multiplexeur (636).

11. Système selon la revendication 9 ou 10, dans lequel la banque (665) comprend x blocs (675), où x est au moins 1, dans lequel l'un de la pluralité des processeurs (610) peut accéder à un bloc (675) à tout moment.

12. Système selon l'une quelconque des revendications 9 - 11, comprenant en outre une unité de régulation du flux (645) pour synchroniser les processeurs (610) pour accéder à différents blocs (675) à tout moment.

13. Système selon l'une quelconque des revendications 9 - 12, comprenant en outre un registre de priorités pour stocker la priorité d'accès d'un processeur (610).

14. Système selon l'une quelconque des revendications 9 - 13, comprenant en outre une pluralité de modules de mémoire critiques (615) pour stocker une pluralité de mots de donnée pour les processeurs (610) pour réduire la possibilité de conflit.
